(19) Europäisches Patentamt / European Patent Office / Office européen des brevets

(11) **EP 4 293 464 A1**

(12) **EUROPEAN PATENT APPLICATION**

(43) Date of publication:
**20.12.2023 Bulletin 2023/51**

(21) Application number: **23179314.2**

(22) Date of filing: **14.06.2023**

(51) International Patent Classification (IPC):
**G05D 1/02** $^{(2020.01)}$

(52) Cooperative Patent Classification (CPC):
**G05D 1/0206**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **15.06.2022 US 202217841236**

(71) Applicant: **Furuno Electric Company Limited Hyogo 662-8580 (JP)**

(72) Inventors:
• **MIYABE, Yuta**
  **Nishinomiya-City, 662-8580 (JP)**
• **TAKAHASHI, Tomoyasu**
  **Nishinomiya-City, 662-8580 (JP)**

(74) Representative: **Müller Hoffmann & Partner Patentanwälte mbB**
  **St.-Martin-Strasse 58**
  **81541 München (DE)**

(54) **DISTURBANCE ESTIMATING APPARATUS, METHOD, AND COMPUTER PROGRAM**

(57) A disturbance estimation apparatus (1) includes a navigation data receiver (3), a thrust data receiver (4), a position estimator (51), and a disturbance calculator (52). The navigation data receiver (3) acquires navigation data including an actual position and time of the ship on a water surface. The thrust data receiver (4) receives thrust data indicating a magnitude and a direction of a thrust force of the ship. The position estimator (51) esti-mates a predicted position of the ship under an absence of a disturbance condition at a predetermined time in the future using a state estimation model based on the navigation data and the thrust data. The disturbance calculator (52) determines disturbance data including a drift direction of the ship drifted by an external force based on a difference between the predicted position and an actual position of the ship at the predetermined time.

FIG. 1

EP 4 293 464 A1

**Description**

The present disclosure mainly relates to a method and an apparatus for estimating disturbance and positioning a marine vessel, and more specifically, to a method and an apparatus for automatically maintaining a selected position or heading direction of a marine vessel.

In an automatic maneuvering (auto-pilot) of a ship or a fixed position holding of a ship, the required information, such as position information and speed information, is acquired by determining a position of the ship using a GNSS (Global Navigation Satellite System) device on the ship. Based on the position information and the speed information, the hull of the ship is controlled toward the desired course and the fixed position. However, disturbance usually acts on the ship, which can interfere with stable control. Here, "disturbance" is defined as interference (force) that various equipment receives from outside with respect to its normal operating state. Ships are no exception, and wave forces or air forces caused by ocean waves or wind, and irregularities in the sea surface may be the main reason of the disturbances.

Normally, an amount of ship movement acquired during maneuvering includes "an amount of ship movement due to thrust generated by the ship", and "an amount of ship movement due to disturbance". It is difficult to accurately estimate the disturbance from the position information of the ship, because it is difficult to distinguish them based on the position information of the ship. Moreover, this disturbance usually changes by increments. If it is possible to ascertain in a timely manner how much disturbance affects the control of the ship, the hull control can be performed more appropriately. As a result, it is expected that the destination can be reached faster and more accurately.

For the aforementioned reasons, there is a need for providing a method and an apparatus for estimating disturbance acting on the ship in a timely and accurate manner to navigate the ship to the destination faster or holding the ship at a fixed position.

In an embodiment of the present disclosure, there is provided a disturbance estimation apparatus. The disturbance estimation apparatus includes a navigation data receiver, a thrust data receiver, and processing circuitry. The navigation data receiver configured to acquire navigation data including actual position and time of a ship on a water surface. The thrust data receiver configured to receive thrust data indicating a magnitude and a direction of a thrust force of the ship. The processing circuitry configured to estimate a predicted position of the ship under an absence of a disturbance condition at a predetermined time in the future using a state estimation model based on the navigation data and the thrust data, and determine disturbance data including a drift direction of the ship drifted by an external force based on a difference between the predicted position estimated by the state estimation model and an actual position of the ship at the predetermined.

Additionally, or optionally, the state estimation model is a kinetic model of the body of the ship, and the processing circuitry is further configured to: estimate the predicted position of the ship under the absence of the disturbance condition at the predetermined time in the future using the kinetic model of the body of the ship based on the navigation data and the thrust data.

Additionally, or optionally, the processing circuitry further configured to: estimate the predicted position of the ship at the predetermined time using the kinetic model of the body of the ship under a disturbance caused by the wind based on information from an anemometer, and determine the disturbance data including the drift direction of the ship drifted by a tidal current based on the difference between the predicted position estimated by the kinetic model of the body of the ship and the actual position of the ship at the predetermined time.

Additionally, or optionally, the processing circuitry further configured to: estimate the predicted position of the ship at the predetermined time using the kinetic model of the body of the ship under the disturbance caused by the tidal current based on information from a tidal current meter, and determine the disturbance data including the drift direction of the ship drifted by the wind based on the difference between the predicted position estimated by the kinetic model of the body of the ship and the actual position of the ship at the predetermined time.

Additionally, or optionally, the state estimation model is a first trained model that outputs the predicted position at the predetermined time in the future based on an input including the navigation data and the thrust data, and the processing circuitry is further configured to: estimate the predicted position of the ship at the predetermined time in the future by inputting the navigation data and the thrust data into the first trained model, and determine the disturbance data including the drift direction of the ship drifted by the external force based on the difference between the predicted position estimated by the first trained model and the actual position of the ship at the predetermined time.

Additionally, or optionally, the disturbance estimation apparatus further comprising: a ship information receiver configured to acquire ship information including a size, a weight, a draft, or a shape of the ship, and the processing circuitry is further configured to: input the ship information into the first trained model such that the first trained model outputs the predicted position according to the ship information.

Additionally, or optionally, the processing circuitry is further configured to: acquire measurement information measured by a tidal current meter and an anemometer, determine presence or absence of the disturbance based on the measurement information, and train the first trained model using corrected data as training data to output a corrected predicted position estimated by a retrained first trained model based on the actual position arrived at the predicted time when the absence of the disturbance is determined.

Additionally, or optionally, the disturbance estimation apparatus further comprising: a basic data receiver configured to acquire basic data including a time, tidal current information and wind information at a specific time, and the processing circuitry is further configured to: estimate a predicted drifting position considering that the ship drifts by the disturbance during navigation, by inputting the basic data, the predicted position, and the predicted arrival time into a second trained model which outputs the predicted drifting position.

Additionally, or optionally, the disturbance estimation apparatus further comprising: a global navigation satellite system (GNSS) receiver configured to receive the actual position of the ship.

Additionally, or optionally, the disturbance estimation apparatus further comprising: a display configured to display: a chart including a region where the ship navigates, and the disturbance data including the drift direction at a display position on the chart, wherein the display position corresponds to a location at which the disturbance data is determined.

Additionally, or optionally, the disturbance data further includes a drift speed of the ship drifted by the external force, and wherein the processing circuitry is further configured to: determine the drift speed, based on dividing a distance between the predicted position and the actual position by a time required to reach to the actual position.

Additionally, or optionally, the disturbance estimation apparatus further comprising: a display configured to display: a chart including a region where the ship navigates, and the disturbance data including the drift direction and the drift speed of the disturbance at a display position on the chart, wherein the display position corresponds to a location at which the disturbance data is determined.

Additionally, or optionally, the processing circuitry is further configured to: determine the disturbance data when the magnitude and the direction of the thrust force of the ship are at the substantially constant for a predetermined time.

Additionally, or optionally, the processing circuitry is further configured to: estimate the disturbance data when each of a direction and a speed of the ship is at the substantially constant for a predetermined time.

Additionally, or optionally, the disturbance estimation apparatus further comprising: a ship information receiver configured to acquire ship information including a size, a weight, a draft, or a shape of the ship, and the processing circuitry is further configured to: input the ship information into the first trained model such that the first trained model outputs the predicted position according to the ship information.

Additionally, or optionally, the processing circuitry is further configured to: acquire measurement information measured by a tidal current meter and an anemometer, determine presence or absence of the disturbance based on the measurement information, and train the first trained model using corrected data as training data to output a corrected predicted position estimated by a retrained first trained model based on the actual position arrived at the predicted time when the absence of the disturbance is determined.

Additionally, or optionally, the disturbance estimation apparatus further comprising: a basic data receiver configured to acquire basic data including a time, tidal current information and wind information at a specific time, and wherein the processing circuitry is further configured to: estimate a predicted drifting position considering that the ship drifts by the disturbance during navigation, by inputting the basic data, the predicted position, and the predicted arrival time into a second trained model which outputs the predicted drifting position.

Additionally, or optionally, the processing circuitry is further configured to: estimate the disturbance data when each of a direction and a speed of the ship is substantially constant for a predetermined time.

In another aspect of the present disclosure, there is provided a disturbance estimation method for estimating disturbance acting on a ship. The disturbance estimation apparatus including acquiring navigation data including actual position and time of the ship on a water surface, receiving thrust data indicating a magnitude and a direction of a thrust force of the ship, estimating a predicted position of the ship under an absence of a disturbance condition at a predetermined time in the future using a state estimation model based on the navigation data and the thrust data, and determining disturbance data including a drift direction of the ship drifted by an external force based on a difference between the predicted position estimated by the state estimation model and an actual position of the ship at the predetermined time.

In yet another aspect of the present disclosure, there is provided a non-transitory computer readable medium having stored thereon computer-executable instructions which, when executed by a computer, cause the computer to acquire navigation data including an actual position and time of the ship on a water surface, receive thrust data indicating a magnitude and a direction of a thrust force of the ship, estimate a predicted position of the ship under an absence of a disturbance condition at a predetermined time in the future using a state estimation model based on the navigation data and the thrust data, and determine disturbance data including a drift direction of the ship drifted by an external force based on a difference between the predicted position estimated by the state estimation model and an actual position of the ship at the predetermined time.

The disturbance estimation apparatus of the present disclosure enables the ship to accurately grasp the disturbances, as a result the ship will be able to be controlled ahead of time when the ship changes direction. As well as improving the performance of holding a ship at a fixed position is enabled by accurately grasping disturbances, leading to improvement of straight running and turning performance. For example, when turning, the trim rudder angle for resisting the disturbances is reset. As the disturbance is grasped ahead of turning, the required trim rudder angle can relatively easily be predicted. The disturbance data is displayed on a display to indicate the disturbances accurately. In addition to the advantages of manual operation, especially for those who are fishing, how fast the current ship is drifting in which direction is valuable for obtaining a movement of fish. The disturbance data is one of important information that assists the user in navigation of ship or holding the ship at fixed position or while fishing.

The illustrated embodiments of the subject matter will be best understood by reference to the drawings, wherein like parts are designated by like numerals throughout. The following description is intended only by way of example, and simply illustrates certain selected embodiments of devices, systems, and processes that are consistent with the subject matter as claimed herein:

FIG. 1 is a block diagram illustrating a configuration of a disturbance estimation apparatus according to an embodiment of the present disclosure;

FIG. 2 illustrates an exemplary scenario for determination of the disturbance data according to an embodiment of the present disclosure;

FIG. 3 illustrates a chart including a region surrounding the ship and the disturbance data according to an embodiment of the present disclosure;

FIG. 4 illustrates a chart including a region surrounding the ship and the disturbance data according to an embodiment of the present disclosure;

FIG. 5 is a block diagram illustrating a configuration of the disturbance estimation apparatus according to another embodiment of the present disclosure;

FIG. 6 is a block diagram illustrating a configuration of the disturbance estimation apparatus according to yet another embodiment of the present disclosure;

FIG. 7 is a block diagram illustrating a configuration of the disturbance estimation apparatus according to yet another embodiment of the present disclosure;

FIG. 8 is a block diagram illustrating a configuration of the disturbance estimation apparatus according to yet another embodiment of the present disclosure;

FIG. 9 is a block diagram illustrating a configuration of a first machine training unit according to one embodiment of the present disclosure;

FIGs. 10A and 10B, collectively, represent a flow chart illustrating a disturbance estimation method in accordance with an embodiment of the present disclosure;

FIG. 11 is an exemplary scenario for determination of a drift vector in accordance with an embodiment of the present disclosure;

FIG. 12 is a block diagram illustrating determination of the disturbance in accordance with an embodiment of the present disclosure;

FIG. 13 represents a flow chart illustrating determination of the disturbance in accordance with an embodiment of the present disclosure;

FIG. 14 is an exemplary scenario for determination of the disturbance in accordance with an embodiment of the present disclosure;

FIG. 15 is an exemplary scenario for determination of the disturbance under a wind in accordance with an embodiment of the present disclosure;

FIG. 16 is a block diagram illustrating determination of a disturbance vector under the wind in accordance with an embodiment of the present disclosure;

FIG. 17 is a flow chart for determination of the disturbance under the wind in accordance with an embodiment of the present disclosure;

FIG. 18 is an exemplary scenario for determination of a disturbance under a tidal current in accordance with an embodiment of the present disclosure;

FIG. 19 is a block diagram illustrating determination of the disturbance under the tidal current in accordance with an embodiment of the present disclosure; and

FIG. 20 is a flow chart for determination of the disturbance under the tidal current in accordance with an embodiment of the present disclosure.

Example apparatus are described herein. Other example embodiments or features may further be utilized, and other changes may be made, without departing from the spirit or scope of the subject matter presented herein. In the following detailed description, reference is made to the accompanying drawings, which form a part thereof.

The example embodiments described herein are not meant to be limiting. It will be readily understood that the aspects of the present disclosure, as generally described herein, and illustrated in the drawings, can be arranged, substituted, combined, separated, and designed in a wide variety of different configurations, all of which are explicitly contemplated herein.

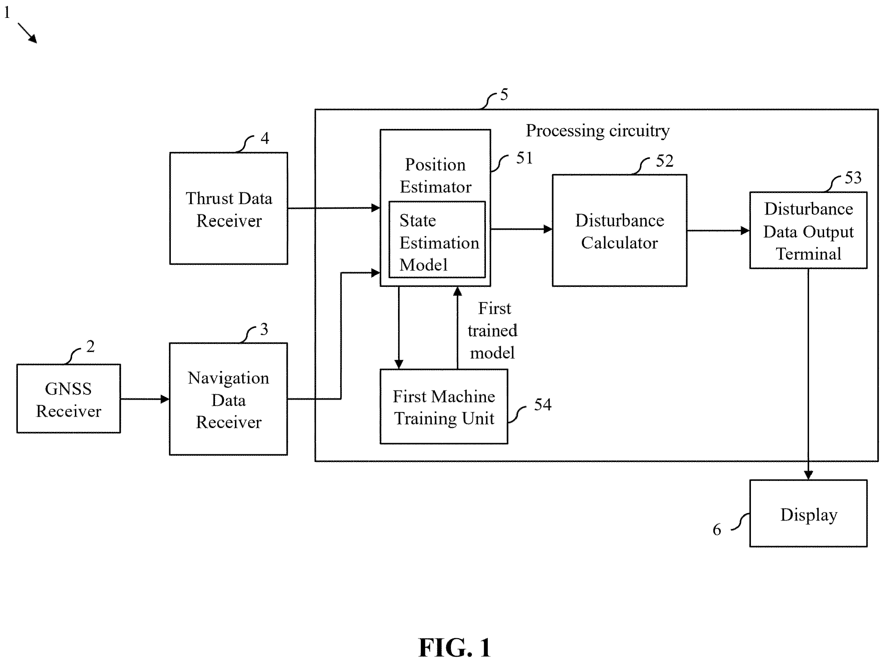

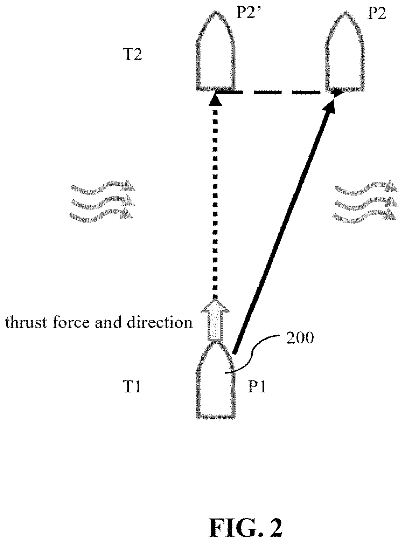

**FIG. 1** is a block diagram illustrating a configuration of a disturbance estimation apparatus 1 for estimating disturbance acting on a ship **200,** according to an embodiment of the present disclosure. **FIG. 2** illustrates an exemplary scenario for determination of the disturbance data according to an embodiment of the present disclosure.

The disturbance estimation apparatus **1** may be installed on the ship **200** for estimating disturbance acting on the ship **200** while navigation of the ship **200** from a source location to a destination location and while maintaining a fixed position of the ship **200.** The disturbance acting on the ship **200** must be continuously monitored. The disturbance estimation apparatus **1** is configured to be used for automatically maintaining the selected position or heading direction of the ship **200** by estimating the disturbance acting on the ship **200** due to tidal currents, wind currents, and the like. Automatic maneuvering (auto-pilot) of the ship **200,** controls movement of the ship **200,** such as navigation or maintaining the fixed position the ship **200,** with assistance of the disturbance estimation apparatus **1.**

The disturbance estimation apparatus **1** includes a global navigation satellite system (GNSS) receiver **2,** a navigation data receiver **3,** a thrust data receiver **4,** processing circuitry **5,** and a display **6.**

The GNSS receiver **2** obtains a plurality of signals from a global navigation network system and determines a position of the ship **200** based on the plurality of signals (hereinafter also referred to as "GNSS signal") to generate the actual position of the ship **200.** The GNSS receiver **2** provides the actual position of the ship **200** to the navigation data receiver **3.** The determination of the position of the ship **200** based on the GNSS signal may performed periodically or continuously, and a moving direction and a moving speed of the ship **200** may be determined along with the actual position of the ship **200.** In one embodiment, the moving direction and the moving speed may be determined by a device other than the GNSS receiver 2, such as a ship speedometer. Along with the actual position, the time at which the actual position is generated is acquired and provided to the navigation data receiver **3.**

The navigation data receiver **3** acquires navigation data including the actual position **P1** indicating the position of the ship **200** at time **T1** on a water surface and the actual position **P2** indicating position of the ship **200** at time **T2** *(i.e.,* predetermined time **T2**). In one embodiment, the navigation data receiver **3** receives the actual position **P1** or **P2** from the GNSS receiver **2.** The thrust data receiver **4** receives thrust data indicating a magnitude and a direction of a thrust force driving the ship **200** during navigation. The processing circuitry **5** estimates a predicted position (same as the virtual position described below) **P2'** of the ship at a future point in time **T2** of the ship **200** to reach the predicted position **P2'** by inputting the navigation data and the thrust data into a state estimation model (first trained model) which outputs the predicted position **P2'** of the ship **200** at the future point in time **T2.** The processing circuitry 5 determines disturbance data including a drift direction of the ship **200** drifted by an external force based on a difference between the predicted position **P2'** estimated by the first trained model and the actual position **P2** of the ship **200** at the predetermined time **T2.** The disturbance data indicates disturbance acting on the ship **200** and assists to control movement of the ship **200** for accurate navigation or holding the ship **200** at a fixed position. The processing circuitry **5** outputs the disturbance data.

With continued reference to **FIG. 1,** the processing circuitry **5** includes a position estimator **51,** a disturbance calculator **52,** a disturbance data output terminal **53,** and a first machine training unit **54.** Referring now to **FIGs. 1** and **2,** an operative state of the ship **200** is evaluated, based on the thrust data acquired by a sensor (shown later) mounted on the motor (engine) or a hull of the ship **200.**

It will be understood by a person skilled in the art that although "motor" is referred to in the current embodiment of the present disclosure, alternatively "engine of an internal combustion" may be used in addition to an electric motor, without deviating from the scope of the present disclosure.

In one embodiment, the disturbance calculator **52** further determines a drift speed of the ship **200.** The disturbance data further includes the drift speed of the ship **200** drifted by the external force. The disturbance calculator **52** determines the drift speed, based on dividing a distance between the predicted position **P2'** and the actual position **P2** by a time required to reach to the actual position **P2** (In **FIG. 2,** the time from T1 to T2). In one embodiment, the disturbance calculator **52** determines the disturbance data when the magnitude and the direction of the thrust force of the ship **200** are at the substantially constant for a predetermined time, *i.e.*, the magnitude and direction of the thrust force are within predetermined ranges during a specific time interval. In another embodiment, the disturbance calculator **52** determines the disturbance data when a direction and a speed of the ship **200** are at the substantially constant for a predetermined time, *i.e.*, the direction and the speed of the ship **200** are within predetermined ranges during a specific time interval.

Referring now to **FIGs. 1** and **2,** in one scenario, from time **T1** to **T2,** the ship **200** should arrive at **P2',** but due to the disturbance, the ship **200** arrives at **P2.** A vector from **P2** to **P2'** can be interpreted as a direction and a magnitude of the disturbance. If the trained model can estimate the arrival point **P2'** at **T2** assuming no disturbance, the disturbance can be calculated from the difference between the estimated arrival point **P2'** and the actual arrival point **P2** at that time **T2.** The time **T2** is arbitrary and examples of time **T2** include, but are not limited to, after 1 second, after 1 minute, and after 10 minutes.

Referring now to **FIGs. 1** and **2,** the disturbance data output terminal **53** may be operably coupled with, and hence in communication with the disturbance calculator **52** and the display **6.** The disturbance data output terminal **53** outputs the disturbance data for displaying the disturbance data on the display **6** that assists in controlling the navigation and/or movement of the ship **200.**

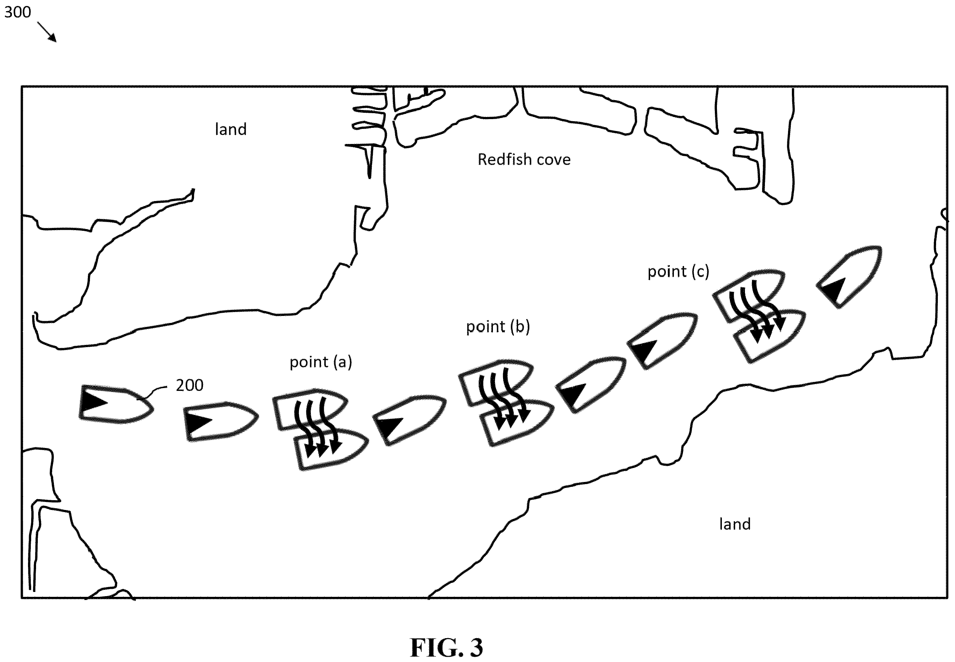

**FIG. 3** illustrates a chart **300** including a region surrounding the ship **200** and the disturbance data according to an embodiment of the present disclosure. The display **6** may be located on-board the ship **200** and provided with, or in electrical connection to, the processing circuitry **5** on the ship **200,** as the ship instrument for purposes as will be explained in detail later herein. The display **6** displays the chart **300** including a region (for example, Redfish cove) where the ship **200** navigates. In addition, in one embodiment, the display **6** displays the disturbance data including the drift direction at a display position on the chart **300**. In another embodiment, the display **6** displays the disturbance data including the drift direction and the drift speed at a display position on the chart **300**. The display position corresponds to a location at which the disturbance data is determined. The disturbance data is stored in a database (not shown) of the disturbance estimating apparatus **1** as time series data as "drift direction" (direction information of ship movement) and "drift speed" (speed information of ship movement). The information is stored in association with the time and position information of each disturbance estimation process. The display **6** may be a multifunctional display that may be used to store to the database the above information.

The display **6** may be configured as, for example, a display screen that forms part of a navigation assisting device to which a ship operator, *i.e.*, a user, who operates the ship **200** refers. However, the display **6** is not limited to the above configuration, and, for example, it may be a display screen for a portable computer which is carried by a ship operator's assistant who monitors the surrounding situation from the ship **200,** a display screen for a passenger to watch in the cabin of the ship **200,** or a display part for a head mounted display, such as a wearable glass, worn by a passenger.

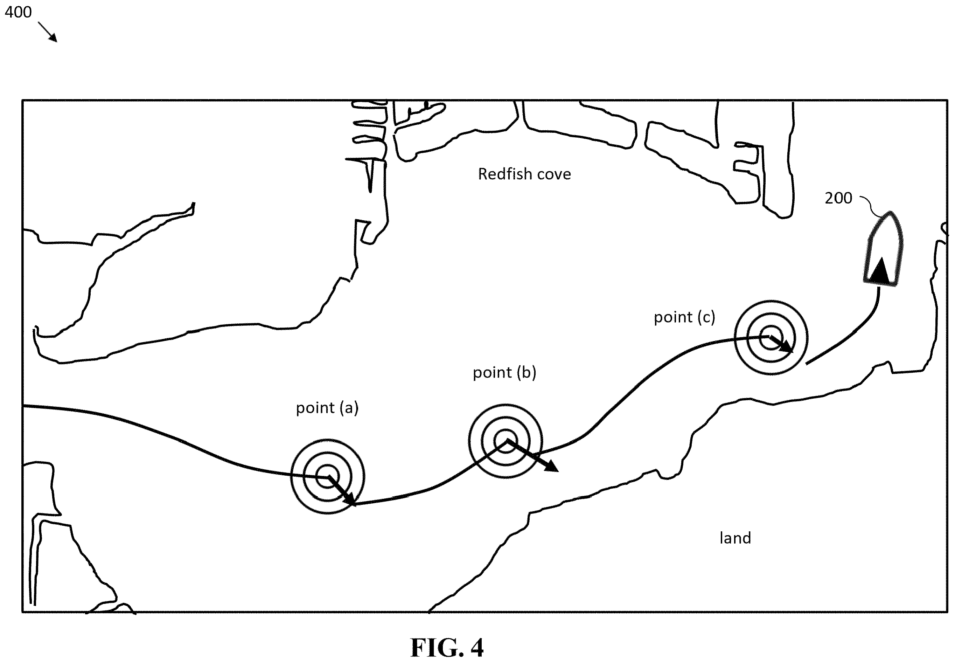

**FIG. 4** illustrates a chart **400** including a region surrounding the ship **200** and the disturbance data according to an embodiment of the present disclosure. The display **6** may be located on-board the ship **200** and provided with, or in electrical connection to, the processing circuitry **5** on the ship **200,** as the ship instrument for purposes as will be explained in detail later herein. The display **6** displays the chart **400** including a region (for example, Redfish cove) where the ship **200** navigates. In addition, the display **6** displays the disturbance data including the drift direction and the drift speed at a display position on the chart **400**. The display position corresponds to a location at which the disturbance data is determined. The disturbance data is stored in a database (not shown) of the disturbance estimating apparatus **1** as time series data as "drift direction" (direction information of ship movement) and "drift speed" (speed information of ship movement). The information is stored in association with the time and position information of each disturbance estimation process. The display **6** may be a multifunctional display that may be used to store to the database the above information.

**FIG. 4** shows the ship **200** cruising west to east (from left to right) in Redfish Cove, Florida. The drift direction is indicated by arrows on the screen. In this embodiment, the drift speed is also calculated, and its magnitude is known by the length of the arrow.

It will be apparent to a person skilled in the art that although in the current embodiment, the drift direction and drift speed are displayed using arrows, the scope of the present disclosure is not limited to it. In various other embodiments, the drift direction and drift speed may be displayed in any suitable manner, for example, the inside of the circle may be displayed in a gray scale together with the drift direction and drift speed, or the state of the wave may be displayed in a moving image, without deviating from the scope of the present disclosure.

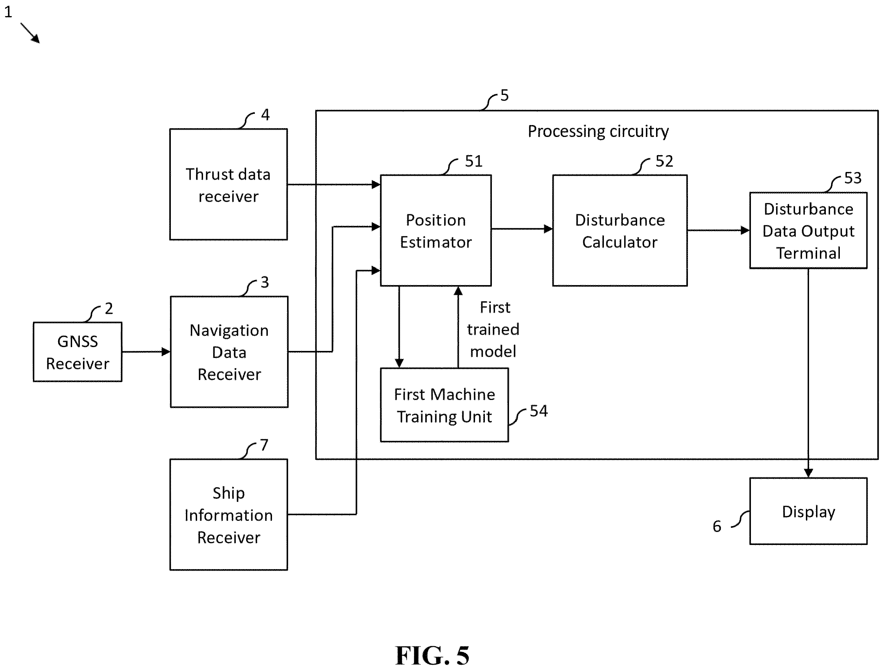

**FIG. 5** is a block diagram illustrating a configuration of the disturbance estimation apparatus **1** for estimating the disturbance acting on the ship **200,** according to another embodiment of the present disclosure.

The disturbance estimation apparatus **1** further includes a ship information receiver 7 that acquires ship information including a size, a weight, a draft, or a shape of the ship **200**. The position estimator **51** inputs the ship information into the first trained model such that the first trained model outputs the predicted position **P2'** at the predetermined time **T2** according to the ship information. The disturbance data further includes the drift speed of the ship **200**. The drift speed varies depending on a size and a shape of the ship **200,** even if the disturbance factors such as tidal currents and wind currents are the same. Here, the speed of the ship **200** which is acted by the disturbance is defined as the speed with which the ship **200** is moved by the disturbance, that is "drift speed of disturbance." When the magnitude and direction of the thrust force is at substantially constant for the predetermined time, the estimation processing of the disturbance data is started. Thus, the disturbance calculator **52** determines the drift direction and the drift speed of the ship **200.**

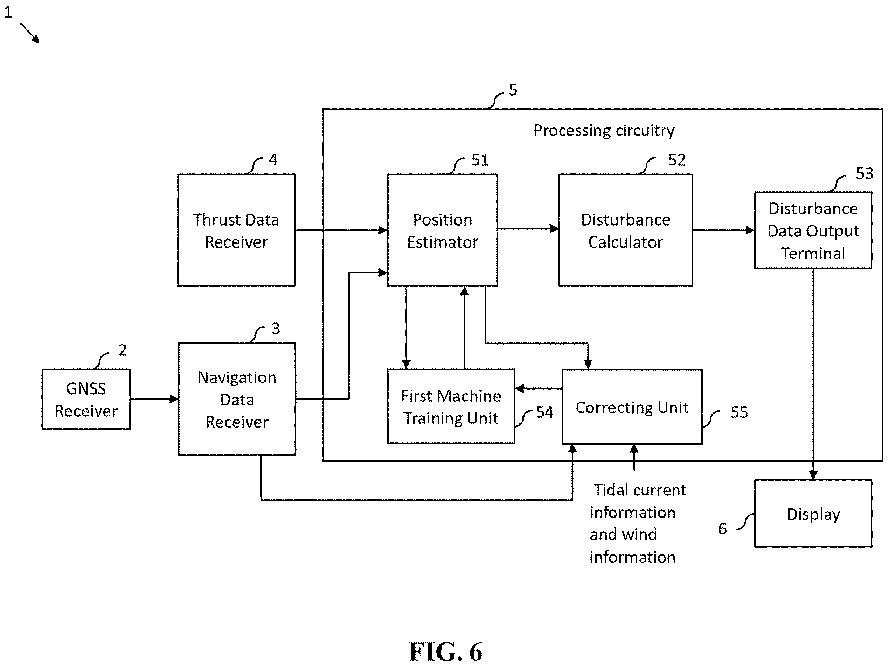

**FIG. 6** is a block diagram illustrating a configuration of the disturbance estimation apparatus **1** for estimating the disturbance acting on the ship **200,** according to yet another embodiment of the present disclosure.

The processing circuitry **5** further includes a correcting unit **55** that acquires measurement information measured by a tidal current meter and an anemometer. The measurement information includes tidal current information measured by the tidal current meter and wind information measured by the anemometer. The correcting unit **55** determines presence or absence of the disturbance based on the measurement information and retrains the first trained model using corrected data as training data to output a corrected predicted position based on the actual position **P2** arrived at the predicted time **T2** when the absence of the disturbance is determined.

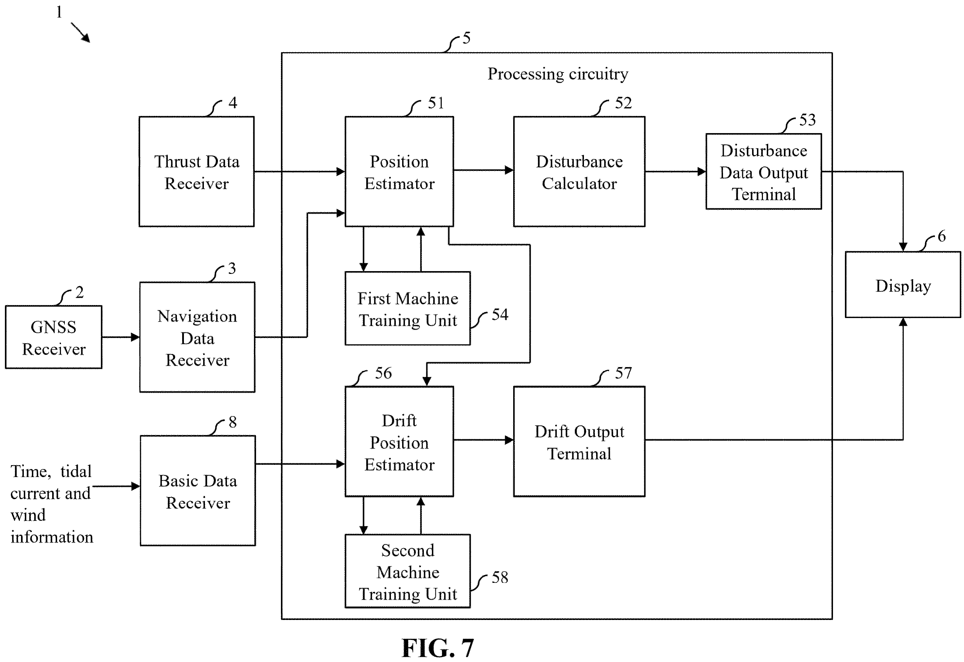

**FIG. 7** is a block diagram illustrating a configuration of the disturbance estimation apparatus **1** for estimating the disturbance acting on the ship **200,** according to yet another embodiment of the present disclosure.

The disturbance estimation apparatus **1** further includes a basic data receiver **8,** and the processing circuitry **5** further includes a drift position estimator **56,** a drift output terminal **57,** and a second machine training unit **58.** The basic data receiver **8** acquires basic data including a time, the tidal current information and the wind information at a specific time. The drift position estimator **56** estimates a predicted drifting position considering that the ship **200** drifts by the disturbance during navigation, by inputting the basic data, the predicted position, and the predetermined time into a second trained model. The second machine training unit **58** including the second trained model outputs the predicted drifting position.

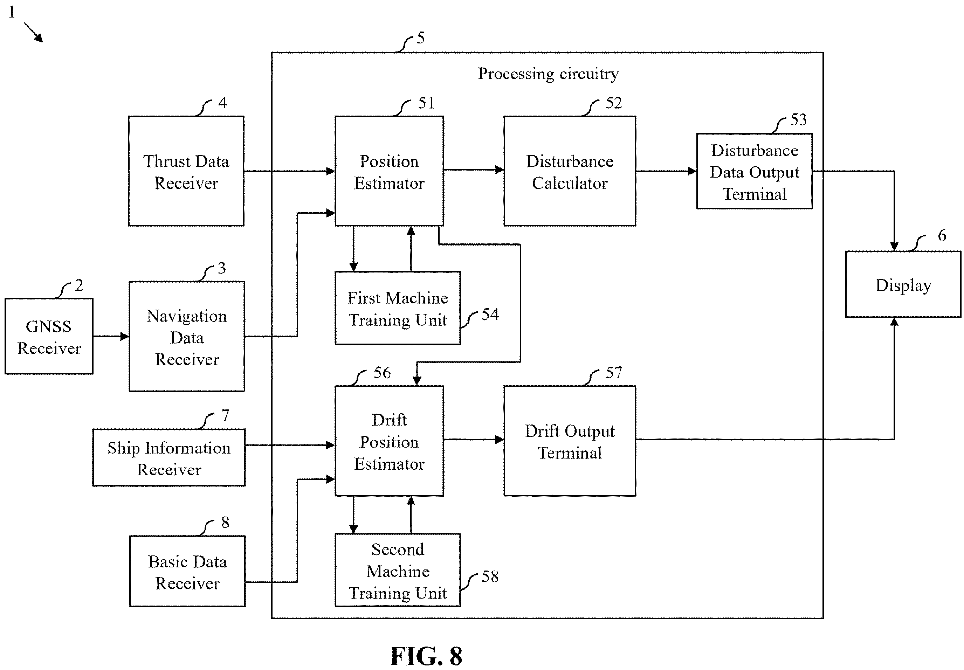

**FIG. 8** is a block diagram illustrating a configuration of the disturbance estimation apparatus **1** for estimating the disturbance acting on the ship **200,** according to yet another embodiment of the present disclosure.

The disturbance estimation apparatus **1** further includes the ship information receiver **7** and the basic data receiver **8,** and the processing circuitry **5** further includes the drift position estimator **56,** the drift output terminal **57,** and the second machine training unit **58.** The basic data receiver **8** acquires basic data including the time, the tidal current information and the wind information at the specific time. The drift position estimator **56** estimates the predicted drifting position considering that the ship **200** drifts by the disturbance during navigation, by inputting the basic data, the predicted position, and the predetermined time into the second trained model. The second machine training unit **58** including the second trained model outputs the predicted drifting position.

Further, the ship information receiver **7** acquires the ship information including the size, the weight, the draft, or the shape of the ship **200.** The drift position estimator **56** inputs the ship information into the second trained model such that the second trained model outputs the predicted position at the predetermined time according to the ship information.

In one embodiment, the disturbance estimating apparatus **1** further includes a motor or propeller or gear (not shown) including a motor rotational speed sensor or a propeller rotational speed sensor or a gear sensor (not shown), respectively, and a rotational speed sensor (not shown). The motor or propeller or gear is associated with driving of the ship **200** having a configuration for measuring the generated propulsion force (thrust force) as the motor or propeller or gear rotational speed sensor. The disturbance estimation apparatus 1 further includes a rudder (not shown) including a rudder sensor (not shown). The rudder is also associated with driving of the ship **200** having a configuration for measuring a rudder angle (hereinafter also referred to as a "thrust direction") as the rudder sensor. The measured thrust force and the thrust direction are provided to the rotational speed sensor and the rudder sensor to generate the thrust data. The thrust data corresponds to a rotational speed of the motor or propeller or gear and the rudder angle. The rotational speed is measured by the sensor attached to the motor or propeller or gear. The rudder angle is measured by the rudder sensor. The rotational speed sensor and the rudder sensor provide the thrust data to the thrust data receiver **4.** Examples of the communication mode utilized by the sensors and other elements, include but are not limited to, serial communication (NMEA 0183), Ethernet, CAN (NMEA 2000), based on the environment of the ship **200.**

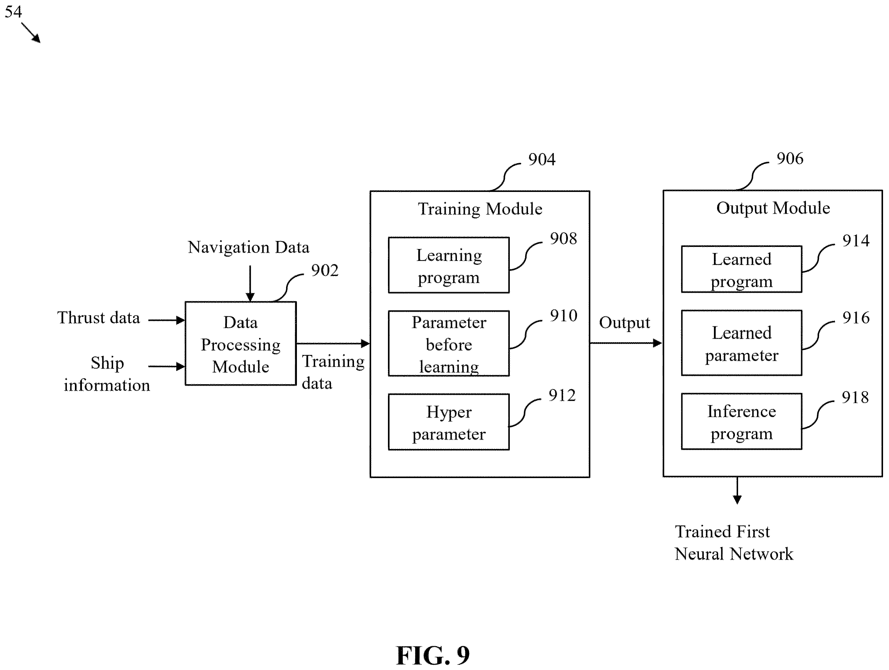

**FIG. 9** is a block diagram illustrating a configuration of the first machine training unit **54,** according to one embodiment of the present disclosure. The first machine training unit **54** includes a data processing module **902,** a training module **904,** and an output module **906.** During the learning process, the data processing module **902** receives the thrust data, the ship information, and the navigation data as the input data, and processes the input data to generate the training data.

Further, the training module **904** stores a learning program **908,** a parameter before learning **910,** and a hyper parameter **912.** The training module **904** receives the training data from the data processing module **902,** and trains a first neural network to learn the predicted position and the predetermined time using the thrust data, the navigation data, and the ship information as the training data, the learning program **908,** and the hyper parameter **912.** The training data may contain the ship information. The hyper parameter **912** is a parameter whose value is used to control the training of the first neural network. The output module **906** received the output of the training module **904,** and stores a learned program **914** and a learned parameter **916** based on the output of the training module **904.** The output module **906** provides the trained first neural network to the position estimator **51** based on the learned program **914,** the learned parameter **916,** and an inference program **918** stored in the output module **906.**

After the learning process, the trained first neural network receives the input data as a reference. The position estimator **51** determines the predicted position **P2'** of the ship **200** at a future point in time and the predetermined time **T2** of the ship **200.** The first neural network training involves the use of an error function. Weights are adjusted such as to minimize a sum of average of the error function on the training data. The process of adjusting the weights is commonly referred to as training. A penalty term is generally applied to the error to restrict the weights in some manner that is thought desirable. The penalty term is used to penalize the magnitudes of weights. In this manner, the first neural network is trained and provides more accurate output with each repetition of a task, such as the generation of the disturbance data. Based on the disturbance data, the ship **200** navigates safely.

It will be apparent to a person skilled in the art that the second machine training unit **58** is structurally and functionally similar to the first machine learning unit **54.**

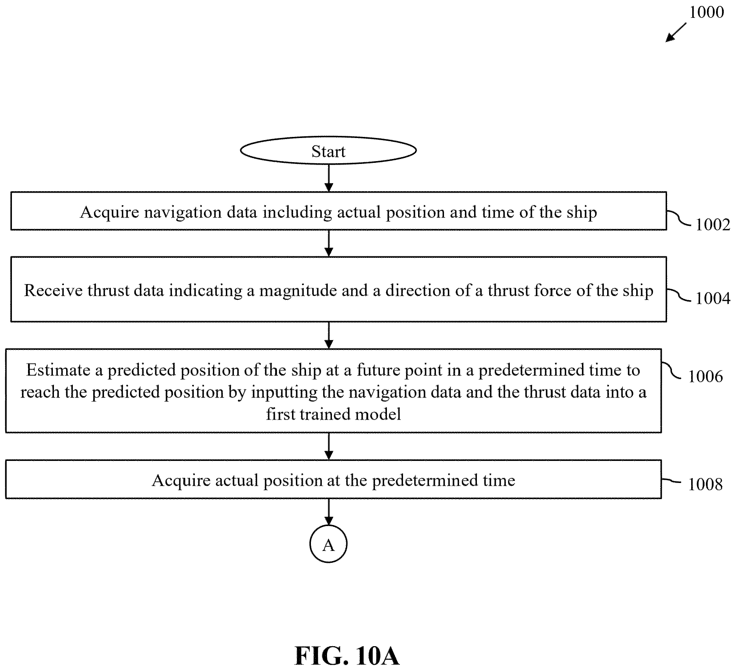

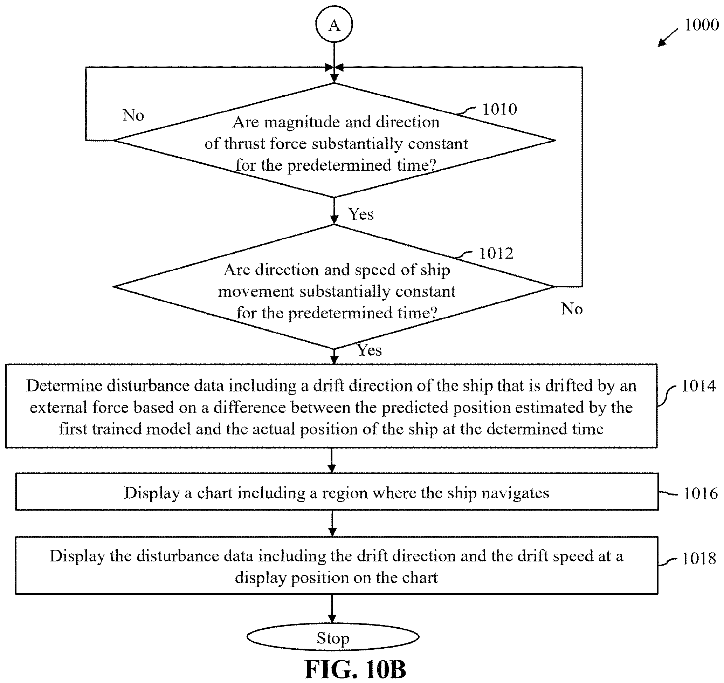

**FIGs. 10A** and **10B**, collectively, represent a flow chart illustrating a disturbance estimation method **1000** in accordance with an embodiment of the present disclosure.

At step **1002**, the navigation data receiver **3** acquires the navigation data including the actual position and time of the ship **200**. At step **1004**, the thrust data receiver **4** receives the thrust data indicating the magnitude and the direction of the thrust force of the ship **200**. At step **1006**, the processing circuitry **5** estimates the predicted position **P2'** of the ship **200** at a future point in time and the predetermined time **T2** of the ship **200** to reach the predicted position **P2'** by inputting the navigation data and the thrust data into the first trained model.

At step **1008**, the processing circuitry **5** acquires the actual position **P2** at the predetermined time **T2**. At step **1010**, the processing circuitry **5** determines whether each of magnitude and direction of thrust force is at substantially constant for the predetermined time. If at step **1010**, the processing circuitry **5** determines that each of the magnitude and direction of thrust force is not at substantially constant for the predetermined time, step **1010** is executed again. If at step **1010**, the processing circuitry **5** determines that each of the magnitude and direction of thrust force is at substantially constant for the predetermined time, step **1012** is executed. Wherein, "constant" means that each of a value of the magnitude and direction of thrust force remains greater than the predetermined lower limit and less than the predetermined upper limit. The processing circuitry may determine that each of magnitude and direction of thrust force is substantially constant for the predetermined period of time based on sensor information, or the determination may be made externally and input externally to the processing circuitry.

At step **1012**, the processing circuitry **5** determines whether direction and speed ship movement are at substantially constant for the predetermined time. If at step **1012**, the processing circuitry 5 determines that each of the direction and speed ship movement is not at substantially constant for the predetermined time, step **1010** is executed again. If at step **1012**, the processing circuitry **5** determines that each of the direction and speed ship movement are at substantially constant for the predetermined time, step **1014** is executed. Wherein, "constant" means that each of a value of direction and speed of the ship movement remains greater than a predetermined lower limit and less than a predetermined upper limit. The processing circuitry **5** may determine that each of direction and speed of the ship movement is substantially constant for the predetermined period of time based on the sensor information, or the determination may be made externally and input externally to the processing circuitry **5**.

At step **1014**, the processing circuitry **5** determines the disturbance data including the drift direction of the ship **200** drifted by an external force based on a difference between the predicted position **P2'** estimated by the first trained model and the actual position **P2** of the ship **200** at the predicted arrival time **T2**.

At step **1016**, the display **6** displays a chart including a region where the ship **200** navigates. At **1018**, the display **6** displays the disturbance data including the drift direction and the drift speed at a display position on the chart.

In one embodiment, a disturbance estimation apparatus is configured to acquire navigation data including an actual position and a time of a ship on a water surface. The disturbance estimation apparatus is further configured to receive thrust data indicating a magnitude and a direction of a thrust force of the ship.

Further, the disturbance estimation apparatus is configured to estimate a predicted position of the ship under an absence of a disturbance condition at a predetermined time in the future using a state estimation model based on the navigation data and the thrust data. Furthermore, the disturbance estimation apparatus determines disturbance data including a drift direction of the ship drifted by an external force based on a difference between the predicted position estimated by the state estimation model and an actual position of the ship at the predetermined time.

In one embodiment, the state estimation model was a first-learning model in the aforementioned embodiment, but may be a kinetic model of the body of the ship. Further, the predicted position of the ship under the absence of the disturbance condition is estimated at the predetermined time in the future using the kinetic model of the body of the ship based on the navigation data and the thrust data.

The state estimation model is a first trained model that outputs the predicted position at the predetermined time in the future by input the navigation data and the thrust data. The predicted position of the ship is estimated at the predetermined time in the future by inputting the navigation data and the thrust data into the first trained model. Further, the disturbance data including the drift direction of the ship drifted by the external force is determined based on the difference between the predicted position estimated by the first trained model and the actual position of the ship at the predetermined time.

In one embodiment, the predicted position of the ship at the predetermined time is estimated using the kinetic model of the body of the ship under a disturbance caused by the wind based on information from an anemometer. Further, the disturbance data including the drift direction of the ship drifted by the tidal current based on the difference between the predicted position estimated by the kinetic model of the body of the ship and the actual position of the ship at the predetermined time.

In another embodiment, the predicted position of the ship is estimated at the predetermined time using the kinetic model of the body of the ship under the disturbance caused by the tidal current based on information from a tidal current meter. Further, the disturbance data including the drift direction of the ship drifted by the wind is determined based on the difference between the predicted position estimated by the kinetic model of the body of the ship and the actual position of the ship at the predetermined time.

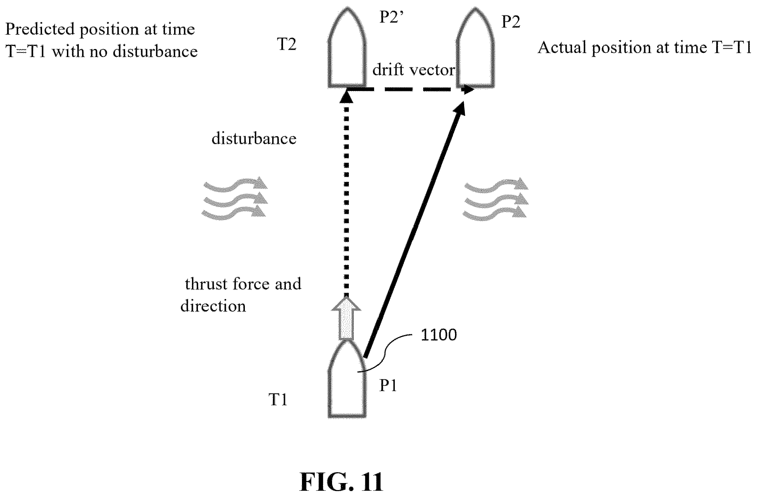

**FIG. 11** exemplary scenario for determination of a drift vector in accordance with an embodiment of the present disclosure. In the scenario, assume a ship **1100** is sailing with a ship control. Further, a navigation data receiver **3** is configured to receive navigation data associated with the ship **1100**. The navigation data includes an actual position **P1** indicating the position of the ship **1100** at time **T1**, and an actual position **P2** indicating the position of the ship **1100** at time **T2**. Further, a thrust data receiver **4** receives thrust data indicating a magnitude and a direction of a thrust force driving the ship **1100** during navigation. Furthermore, a processing circuitry **5** is configured to estimate a predicted position **P2'** of the ship **1100** at a predetermined time in the future. The predicted position **P2'** is estimated under an absence of a disturbance condition. The predicted position **P2'** is referred to as a virtual position without disturbance at the time **T2**. Subsequently, the processing circuitry **5** determines disturbance data including a drift direction of the ship **1100** drifted by an external force based on a difference between the predicted position **P2'** and the actual position **P2** of the ship **1100** at the time **T2**. The drift direction indicates the drift vector of the ship **1100**.

In one scenario, from time **T1** to **T2,** the ship **1100** should arrive at the virtual position **P2'**, but due to the disturbance, the ship **1100** arrives at the actual position **P2**. A vector from **P2** to **P2'** can be interpreted as a direction and a magnitude of the disturbance. If the kinetic model of the body of the ship can estimate the arrival point **P2'** at **T2** assuming no disturbance, the disturbance can be calculated from the difference between the estimated arrival point **P2'** and the actual arrival point **P2** at that time **T2**. The time **T2** is arbitrary and examples of time **T2** include, but are not limited to, after 1 second, after 1 minute, and after 10 minutes.

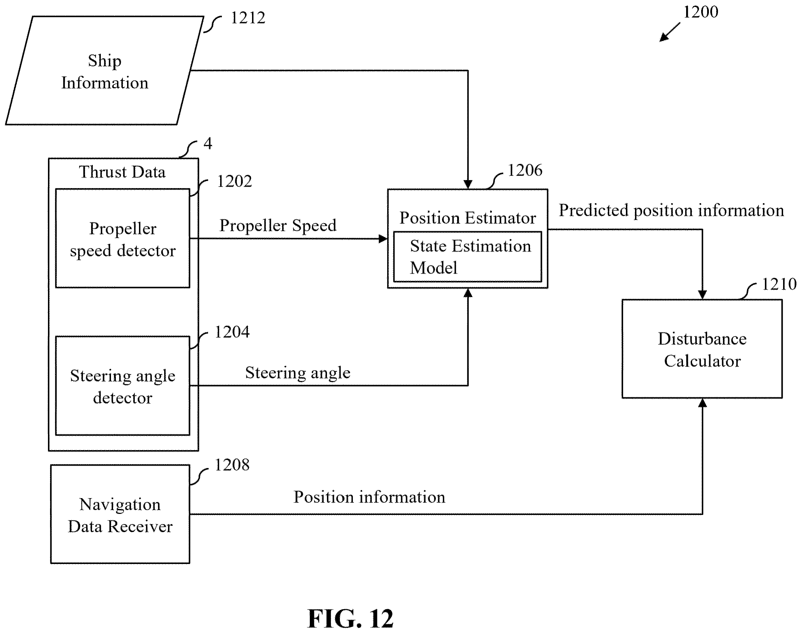

**FIG. 12** is a block diagram **1200** illustrating determination of a disturbance under an absence of a disturbance in accordance with an embodiment of the present disclosure. In one embodiment, a propeller speed detector **1202** is configured to detect a propeller speed of the ship **1100**. The propeller speed is associated with a propeller that is configured to driving of the ship **1100** having a configuration for measuring the generated propulsion force (*i.e.*, thrust force). Further, a relationship between an engine speed and a gear ratio along with an axial tachometer is used the detection of the propeller speed.

Further, a steering angle detection **1204** is configured to measure a steering angle of the ship **1100.**

Furthermore, a position estimator (also called virtual position calculator) **1206** is configured to receive thrust data of the propeller speed and the steering angle, and ship information (also called hull parameters)**1212**. Upon receiving, the position estimator **1206** is configured to determine the virtual position of the ship **1100** under an absence of the disturbance at a predetermined time in the future. In one embodiment, the virtual position of the ship **1100** is determined when the propeller speed and the steering angle are maintained under the absence of the disturbance.

In one example, a Maneuvering Modeling Group (MMG model) is used as a kinetic model of the body of the ship. The model parameters may be entered directly or estimated from the ship information by using Kijima's equation (1) or Yoshimura's equation (2). The equations of motion according to the MMG standard model are shown below.

$$(m + m_x)\,\dot{u} - (m + m_y)vr = X_H + X_R + X_P \qquad\qquad (1)$$

$$(m + m_y)\,\dot{v} - (m + m_x)ur = Y_H + Y_R \qquad\qquad (2)$$

$$(I_{zz} + J_z)\,\dot{r} = N_H + N_R \qquad\qquad (3)$$

Let the mass of the ship be $m$ and the moment of inertia be $I_{zz}$. Let $m_x$, $m_y$ and $J_z$ denote the x-axis added mass, the y-axis added mass and the z-axis added moment of inertia. The forces and moments at the hull centroid are denoted as X, Y and N. The subscripts H, R and P denote the hull component, rudder component and propeller component.

In the case of a model calculation with no disturbance, the ship goes straight ahead, so the value of $\dot{v} = v = \dot{r} = r = 0$. Reflecting this into the equation of motion above, the equation used for the calculation is as follows:

$$(m + m_x)\,\dot{u} = X_H + X_R + X_P \qquad\qquad (4)$$

Upon solving the above equation of motion numerically using a Euler method, a Runge-Kutta method, and so on, a hypothetical position (*i.e.*, the virtual position) of the ship at the time when there is no disturbance is obtained.

Furthermore, a navigation data receiver (also called ship position detector) **1208** is used to detect the actual position of the ship **1100** at time t=t1. The navigation data receiver **1208** uses a satellite compass to detect the actual position of the ship.

A disturbance calculator **1210** is configured to determine a disturbance (flow vector) based on the actual position detected by the navigation data receiver **1208** and the virtual position predicted by the position estimator 1206. The disturbance vector is determined using the equation shown below. In one embodiment, the virtual position is indicated as $(x_V, y_V)$, the actual position is indicated as $(x_A, y_A)$, and the disturbance is indicated as $V_D$.

$$V_D = \sqrt{(x_V - x_A)^2 + (y_V - y_A)^2} \qquad (5)$$

In one example, the steering angle may be assumed to be zero. This is a valid assumption when the disturbance in the real environment is small (*i.e.*, at this time, the rudder was small, and the rudder angle was near zero). As a result of this assumption, the equation of motion may be simplified as shown below.

$$(m + m_x)\,\dot{u} = X_H + X_P \qquad (6)$$

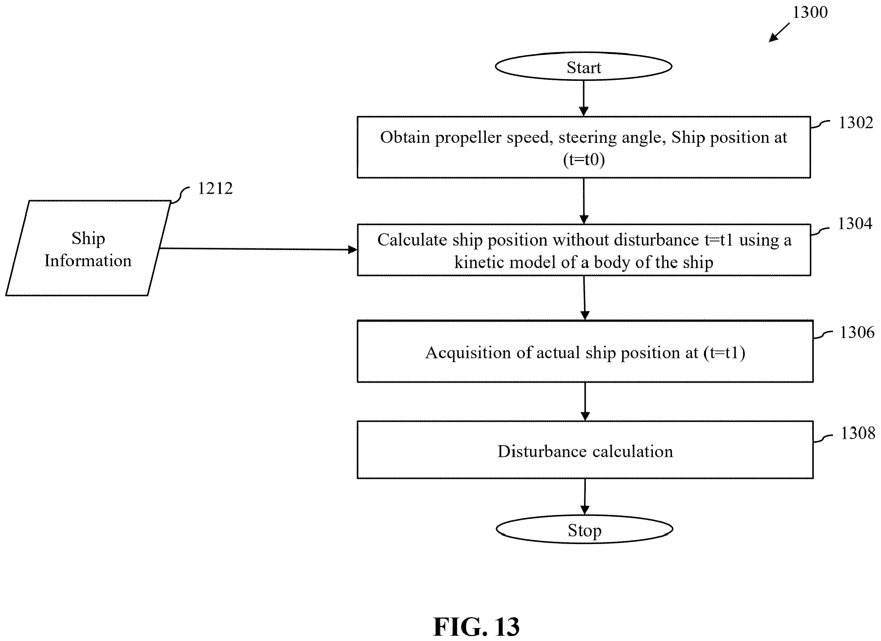

**FIG. 13** is a flow chart **1300** illustrating determination of the disturbance under an absence of a disturbance in accordance with an embodiment of the present disclosure. At step **1302,** a propeller speed of the ship, a steering angle of the ship, and an actual position of the ship at time t=t0 is obtained.

At step **1304,** a virtual position of the ship under an absence of a disturbance condition is determined based on the propeller speed, the steering angle and ship information. The virtual position is determined at t=t1.

At step **1306,** an actual position of the ship at time t=t1 is acquired.

At step **1308,** a disturbance is determined based on the virtual position and the actual position at time t=t1.

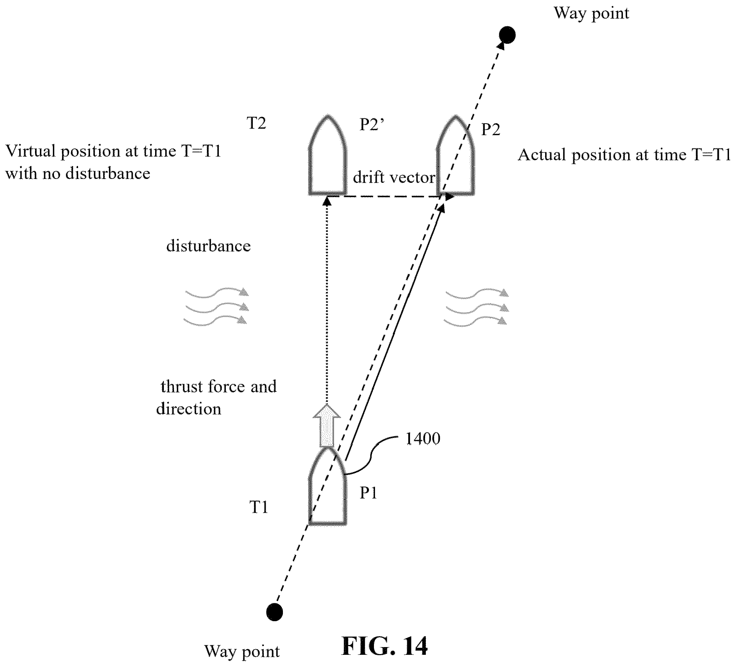

**FIG. 14** is an exemplary scenario for determination of the drift vector in accordance with an embodiment of the present disclosure. In the scenario, navigation data associated with a ship **1400** is received. The navigation data includes an actual position **P1** indicating the position of the ship **1400** at time **T1**, and an actual position **P2** indicating the position of the ship **1400** at time **T2**. In one embodiment, the ship navigates on a line connecting way points. Further, thrust data indicating a magnitude and a direction of a thrust force driving the ship **1400** during navigation is received. Furthermore, a predicted position **P2'** of the ship **1400** at a future point in a predetermined time is estimated. The predicted position **P2'** is estimated under an absence of a disturbance condition. The predicted position **P2'** is referred to as a virtual position without disturbance at the predetermined time **T2**. Subsequently, disturbance data including a drift direction of the ship **1400** drifted by an external force is determined based on a difference between the predicted position **P2'** and the actual position **P2** of the ship **1400** at the time **T2**. The drift direction indicated the drift vector of the ship **1400**. The drift vector is referred to as a disturbance of the ship.

In the scenario, to the ship **1400** navigates on the line connecting the way points, and as a result, if the actual position at the time **T2** is different from the virtual position at the time **T2** without disturbance, the difference is swept away and becomes a vector (*i.e.*, the drift vector). Thus, the algorithm at the time of direction control can be applied as it is.

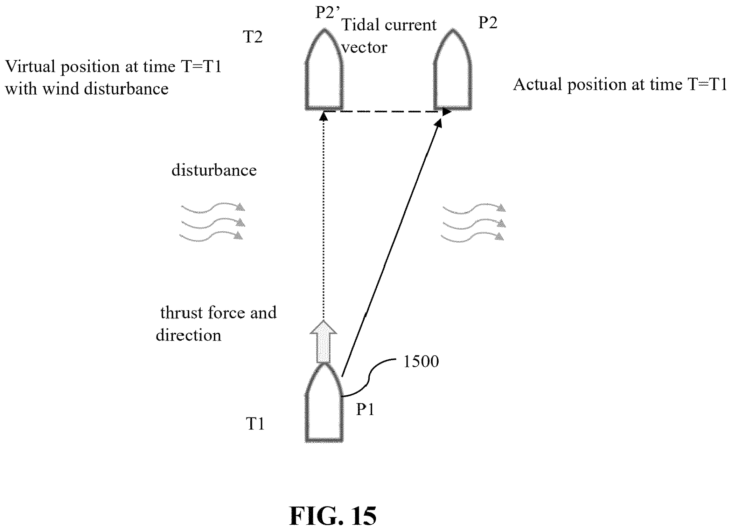

**FIG. 15** is an exemplary scenario for determination of a disturbance in accordance with an embodiment of the present disclosure. In one scenario, navigation data associated with a ship **1500** is received. The navigation data includes an actual position **P1** indicating the position of the ship **1500** at time **T1**, and an actual position **P2** indicating the position of the ship **1500** at time **T2**. Further, thrust data indicating a magnitude and a direction of a thrust force driving the ship **1500** during navigation is received. Furthermore, a predicted position **P2'** of the ship **1500** at a predetermined time in the future is estimated. The predicted position **P2'** is estimated under a disturbance condition caused by the wind at the predetermined time in the future. The predicted position **P2'** is referred to as a virtual position without disturbance at the time T2 (*i.e.*, the predetermined time). Subsequently, disturbance data including a drift direction of the ship **1500** drifted by an external force is determined based on a difference between the predicted position **P2'** and the actual position **P2** of the ship **1500** at the time **T2**. The drift direction indicates a tidal current vector of the ship **1500**. The tidal current vector is referred to as a disturbance of the ship. In one embodiment, motion due to wind and motion due to disturbance are collectively estimated as the disturbance, and disturbance can be estimated by introducing an external force term due to the wind into the MMG model.

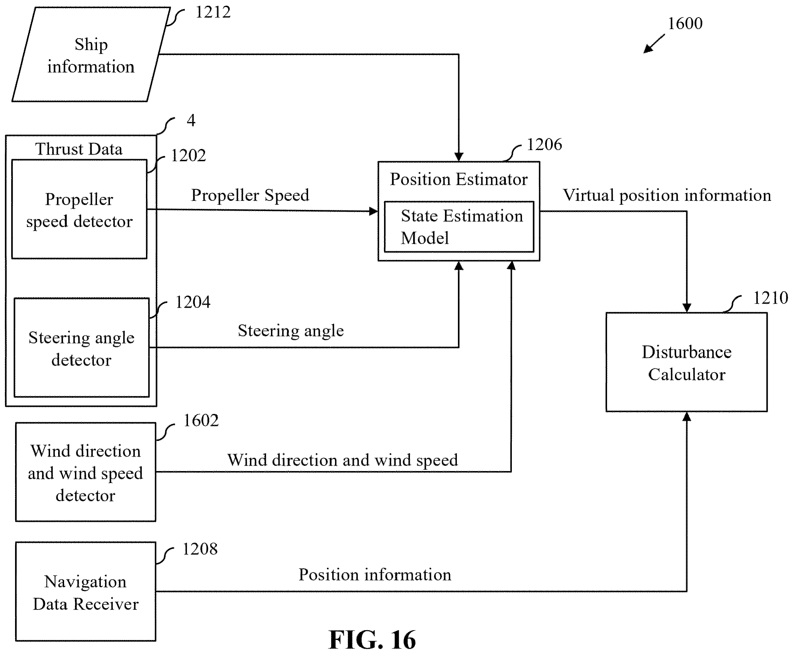

**FIG. 16** is a block diagram **1600** illustrating determination of the disturbance (tidal current vector) in accordance with an embodiment of the present disclosure. In one embodiment, the propeller speed detector **1202,** the steering angle detection **1204,** and the navigation data receiver **1208** functions in a similar manner as explained in the **FIG. 12.**

A wind direction and wind speed detector **1602** is configured to measure a wind direction and a wind speed. Further, the wind direction and wind speed detector **1602** provides an output (*i.e.*, the wind direction and the wind speed) to a position estimator **1206.**

Further, the position estimator **1206** is configured to determine a virtual position of the ship based on the propeller speed, the steering angle, the wind direction and the wind speed, and ship information **1212**. The virtual position of the ship is determined under the disturbance of the wind. The position estimator **1206** is configured to obtain the virtual position of the ship at the time of day using the MMG model with the following terms representing the force due to wind. The position estimator **1206** uses the below equations to determine the virtual position of the ship under the wind disturbance. $X_W$, $Y_W$, and $N_W$ are functions of relative wind direction and relative wind speed, and the coefficients in these functions are determined from the ship shape by using Blenderman's equation, Fujiwara's equation, and so on. $x_{VW}$ and $y_{VW}$ are the hypothetical positions of a ship under wind disturbance. The $x_{VW}$ and $y_{VW}$ is obtained by solving equations (7), (8) and (9) numerically using Euler's method Runge-Kutta method and so on.

$$(m + m_x)\,\dot{u} - (m + m_y)vr = X_H + X_R + X_P + X_W \qquad (7)$$

$$(m + m_y)\,\dot{v} - (m + m_x)ur = Y_H + Y_R + Y_W \qquad (8)$$

$$(I_{zz} + J_z)\,\dot{r} = N_H + N_R + N_W \qquad (9)$$

Furthermore, a disturbance calculator **1210** is configured to determine a disturbance vector based on the actual position of the ship detected by the navigation data receiver **1208,** and the virtual position of the ship detected by the position estimator **1206**. The disturbance (*i.e.*, assume that vessels also move with the movement of surface tidal currents, that can be approximately considered as a surface current vector.) by the current is obtained based on the equations below. $x_{AW}$ and $y_{AW}$ are the actual position of the ship detected by the navigation data receiver 1208.

$$V_C = \sqrt{(x_{VW} - x_{AW})^2 + (y_{VW} - y_{AW})^2} \qquad (10)$$

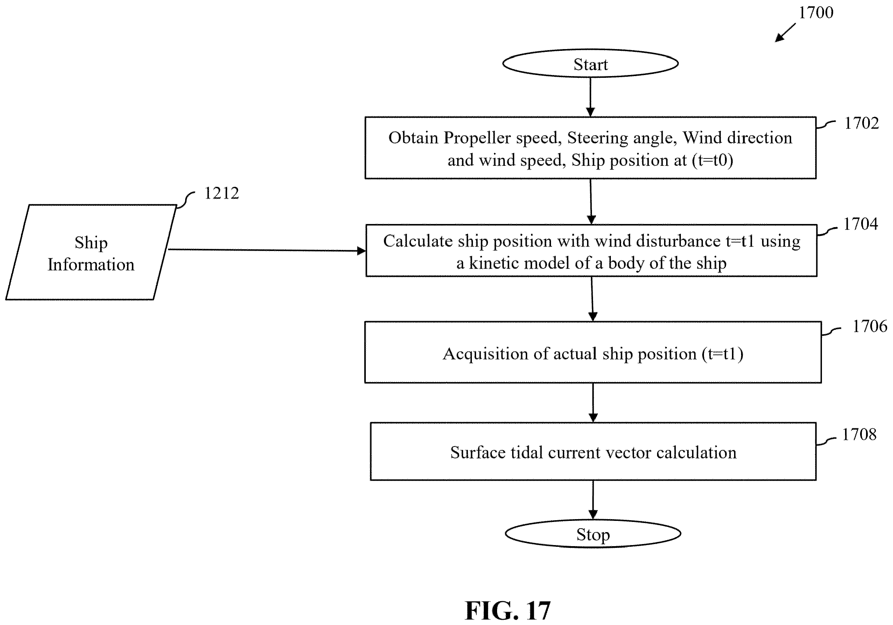

**FIG. 17** is a flow chart **1700** for determination of the disturbance in accordance with an embodiment of the present disclosure. At step **1702,** a propeller speed of the ship, a steering angle of the ship, and an actual position of the ship at time t=t0 is obtained.

At step **1704,** a virtual position of the ship under a wind disturbance condition is determined based on the propeller speed, the steering angle and ship information. The virtual position is determined at time t=t1.

At step **1706,** an actual position of the ship at time t=t1 is acquired.

At step **1708,** the disturbance (tidal current vector) is determined based on the virtual position and the actual position of the ship at time t=t1.

In one embodiment, a disturbance (wind flow vector) may be estimated using the same method as used for estimating the tidal current vector. In this case, a tidal current detector is used instead of the wind direction and wind speed detector as shown in FIG. 16**Fehler! Verweisquelle konnte nicht gefunden werden.** Further, the MMG model with a force due to the current $X_C$, $Y_C$, $N_C$ is used instead of the MMG model with the force due to the wind used in the position estimator **1206** in **Fehler! Verweisquelle konnte nicht gefunden werden.** In one embodiment, the virtual position under the wind disturbance is calculated using the equations 11, 12 and 13.

$$(m + m_x)\,\dot{u} - (m + m_y)vr = X_H + X_R + X_P + X_C \qquad (11)$$

$$(m + m_y)\,\dot{v} - (m + m_x)ur = Y_H + Y_R + Y_C \qquad (12)$$

$$(I_{zz} + J_z)\,\dot{r} = N_H + N_R + N_C \qquad (13)$$

In one embodiment, the calculation formula for determining the virtual position may be complicated when determining the force due to the tidal current from the tidal current vector. Assuming that the ship moves with the surface water particles (*i.e.*, the ship moves as much as the tidal current vector and does not turn due to the current.), the following method can be used to calculate the virtual position under the current disturbance, $(x_{VC}, y_{VC})$.

Initially, the MMG model without disturbance is used to calculate the virtual position without disturbance, $(x_V, y_V)$.

In addition, the ship position displacement from time **T1** to T2, $(x_C, y_C)$ is calculated using equation below. The $u_C$ and $v_C$ are the time integration values of the tidal current vector detected by the tidal current detector.

$$x_C = \int_{T1}^{T2} u_C \, dt, \quad y_C = \int_{T1}^{T2} v_C \, dt \qquad\qquad (14)$$

From these values, the virtual position under the current disturbance is obtained as follows, $(x_{VC}, y_{VC})$. The virtual position under the current disturbance is determined using the equations 15 and 16.

$$x_{VC} = x_V + x_C \qquad\qquad (15)$$

$$y_{VC} = y_V + y_C \qquad\qquad (16)$$

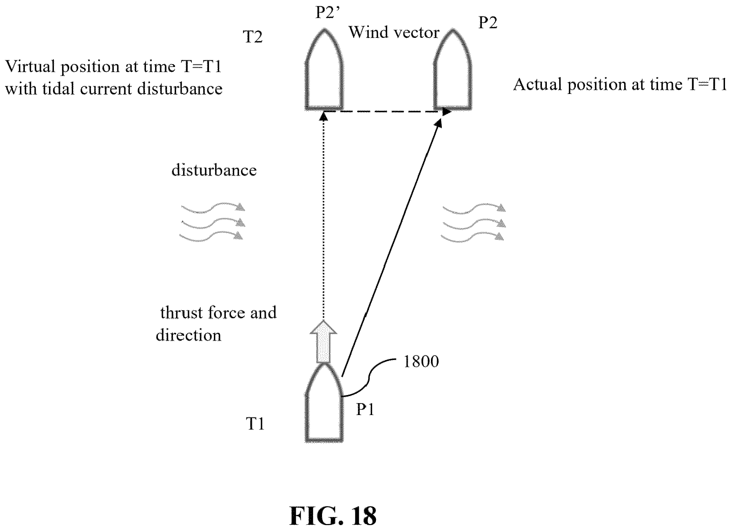

**FIG. 18** is an exemplary scenario for determination of a disturbance (wind) in accordance with an embodiment of the present disclosure. In one scenario, navigation data associated with a ship **1800** is received. The navigation data includes an actual position **P1** indicating the position of the ship **1500** at time **T1**, and an actual position **P2** indicating the position of the ship **1800** at time **T2**. Further, thrust data indicating a magnitude and a direction of a thrust force driving the ship **1800** during navigation is received. Furthermore, a predicted position **P2'** of the ship **1800** at a predetermined time in the future is estimated. The predicted position **P2'** is estimated under a disturbance condition caused by a tidal current at the predetermined time in the future. The predicted position **P2'** is referred to as a virtual position without disturbance at the time T2 (*i.e.*, the predetermined time). Subsequently, disturbance data including a drift direction of the ship **1800** drifted by an external force is determined based on a difference between the predicted position **P2'** and the actual position **P2** of the ship **1800** at the time **T2**. The drift direction indicates a wind vector of the ship **1800**. The wind vector is referred to as a disturbance.

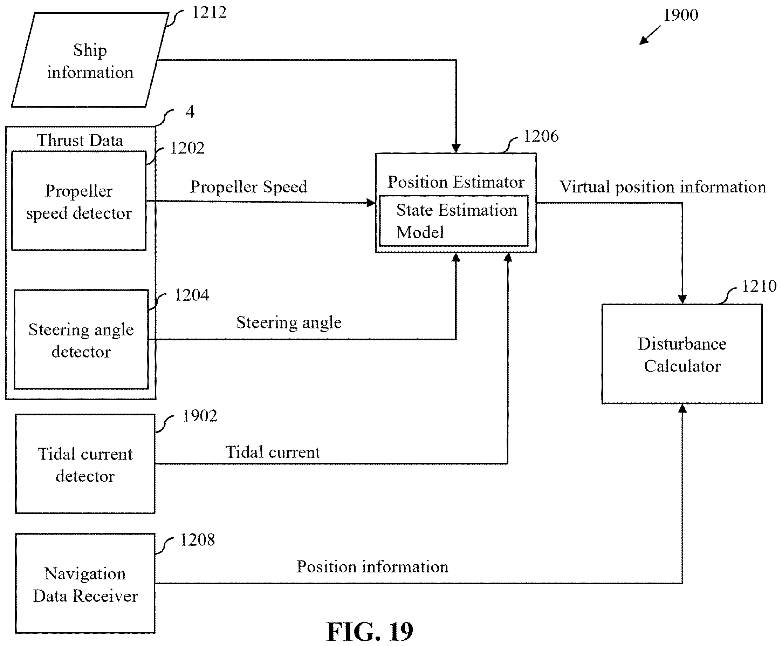

**FIG. 19** is a block diagram **1900** illustrating determination of a disturbance under a tidal current in accordance with an embodiment of the present disclosure. In one embodiment, the propeller speed detector **1202**, the steering angle detection **1204**, and the navigation data receiver **1208** functions in a similar manner as explained in the **FIG. 12.**

A tidal current detector **1902** is configured to measure a tidal current. Further, the tidal current detector **1902** provides an output (*i.e.*, the tidal current) to a position estimator **1206.**

Further, the position estimator **1206** is configured to determine a virtual position of the ship based on the propeller speed, the steering angle, the tidal current, and ship information **1212**. The virtual position of the ship is determined under the disturbance of the tidal current.

Furthermore, a disturbance calculator **1210** is configured to determine a disturbance based on the actual position of the ship detected by the navigation data receiver **1208,** and the virtual position of the ship detected by the position estimator **1206.**

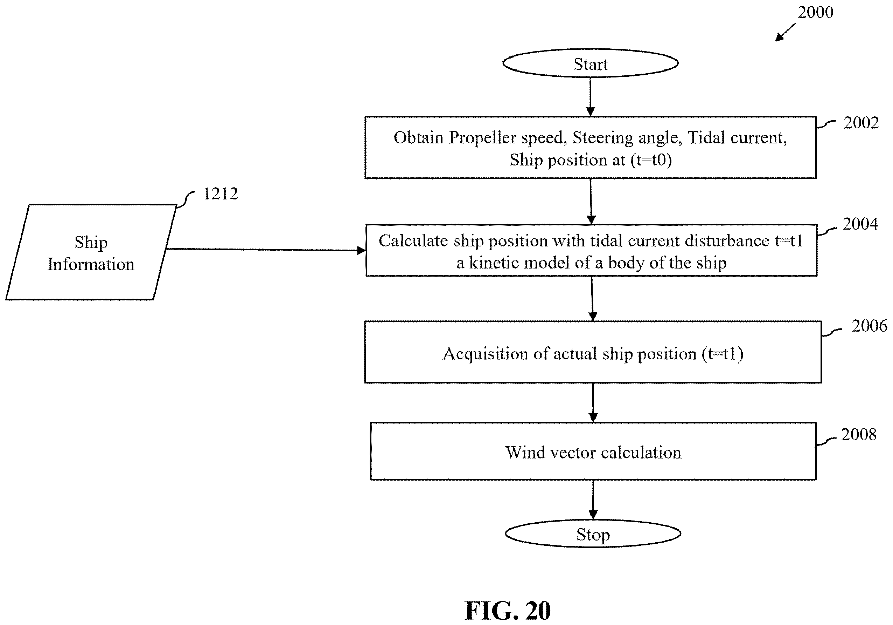

**FIG. 20** is a flow chart **2000** for determination of the disturbance under a tidal current in accordance with an embodiment of the present disclosure. At step **2002,** a propeller speed of the ship, a steering angle of the ship, and an actual position of the ship at time t=t0 is obtained.

At step **2004,** a virtual position of the ship under a disturbance condition caused by the tidal current is determined based on the propeller speed, the steering angle and ship information. The virtual position is determined at time t=t1.

At step **2006,** an actual position of the ship at time t=t1 is acquired.

At step **2008,** the disturbance is determined based on the virtual position and the actual position of the ship at time t=t1.

| | |
|---|---|
| 1 | Disturbance estimation apparatus |
| 2 | Global navigation satellite system (GNSS) receiver |
| 3 | Navigation data receiver |
| 4 | Thrust data receiver |
| 5 | Processing circuitry |
| 6 | Display |
| 8 | Basic data receiver |
| 51 | Position estimator |
| 52 | Disturbance calculator |
| 53 | Disturbance data output terminal |
| 54 | First machine training unit |
| 56 | Drift position estimator |
| 200 | Hull of the ship |
| 902 | Data processing module |

904    Training module
906    Output module
908    Learning program
910    Parameter before learning
912    Hyper parameter
914    Learned program
916    Learned parameter
918    Inference program
1202   Propeller speed detector
1204   Steering angle detection
1206   Position estimator
1208   Navigation data receiver
1210   Disturbance calculator
1212   Ship information
1602   Wind direction and wind speed detector
1902   Tidal current detector

**Claims**

1.  A disturbance estimation apparatus (1), comprising:

    a navigation data receiver (3) configured to acquire navigation data including actual position and time of a ship on a water surface;
    a thrust data receiver (4) configured to receive thrust data indicating a magnitude and a direction of a thrust force of the ship; and
    a position estimator (51) configured to estimate a predicted position of the ship under an absence of a disturbance condition at a predetermined time in the future using a state estimation model based on the navigation data and the thrust data; and
    a disturbance calculator (52) configured to determine disturbance data including a drift direction of the ship drifted by an external force based on a difference between the predicted position estimated by the state estimation model and an actual position of the ship at the predetermined time.

2.  The disturbance estimation apparatus (1) of claim 1, wherein the state estimation model is a kinetic model of a body of the ship, and the position estimator (51) is further configured to:
    estimate the predicted position of the ship under the absence of the disturbance condition at the predetermined time in the future using the kinetic model of the body of the ship based on the navigation data and the thrust data.

3.  The disturbance estimation apparatus (1) of claim 2, wherein the position estimator (51) is further configured to:

    estimate the predicted position of the ship at the predetermined time using the kinetic model of the body of the ship under a disturbance caused by wind based on information from an anemometer; and
    the disturbance calculator (52) is further configured to determine the disturbance data including the drift direction of the ship drifted by a tidal current based on the difference between the predicted position estimated by the kinetic model of the body of the ship and the actual position of the ship at the predetermined time.

4.  The disturbance estimation apparatus (1) of claim 2, wherein the position estimator (51) is further configured to:

    estimate the predicted position of the ship at the predetermined time using the kinetic model of the body of the ship under the disturbance caused by a tidal current based on information from a tidal current meter; and
    the disturbance calculator (52) is further configured to determine the disturbance data including the drift direction of the ship drifted by the wind based on the difference between the predicted position estimated by the kinetic model of the body of the ship and the actual position of the ship at the predetermined time.

5.  The disturbance estimation apparatus (1) of claim 1, wherein the state estimation model is a first trained model that outputs the predicted position at the predetermined time in the future based on an input including the navigation data and the thrust data, and the position estimator (51) is further configured to:
    estimate the predicted position of the ship at the predetermined time in the future by inputting the navigation data and the thrust data into the first trained model; and
the disturbance calculator (52) is further configured to determine the disturbance data including the drift direction of the ship drifted by the external force based on the difference between the predicted position estimated by the first trained model and the actual position of the ship at the predetermined time.

**6.** The disturbance estimation apparatus (1) of claim 5, further comprising:
a ship information receiver configured to acquire ship information including at least one of a size, a weight, a draft, and a shape of the ship, wherein a first machine training unit (54) is configured to:
input the ship information into the first trained model such that the first trained model outputs the predicted position according to the ship information.

**7.** The disturbance estimation apparatus (1) of claim 5 or claim 6, wherein the first machine training unit (54) is further configured to:

acquire measurement information measured by a tidal current meter and an anemometer;
determine a presence or an absence of the disturbance based on the measurement information; and
train the first trained model using corrected data as training data to output a corrected predicted position estimated by a retrained first trained model based on the actual position of the ship at the predetermined time when the absence of the disturbance is determined.

**8.** The disturbance estimation apparatus (1) as claimed in any of claims 5 to 7, further comprising:
a basic data receiver configured to acquire basic data including at least one of a time, tidal current information, and wind information at a specific time, and the processing circuitry is further configured to:
estimate a predicted drifting position of the ship drifted by the disturbance during navigation, by inputting the basic data, the predicted position, and the predetermined time into a second trained model which outputs the predicted drifting position.

**9.** The disturbance estimation apparatus (1) as claimed in any of claims 1 to 8, further comprising:
a global navigation satellite system (GNSS) receiver configured to receive the actual position of the ship.

**10.** The disturbance estimation apparatus (1) as claimed in any of claims 1 to 9, further comprising:
a display (6) configured to display:

a chart including a region where the ship navigates; and
the disturbance data including the drift direction at a display position on the chart, wherein the display position corresponds to a location at which the disturbance data is determined.

**11.** The disturbance estimation apparatus (1) as claimed in any of claims 1 to 10, wherein the disturbance data further includes a drift speed of the ship drifted by the external force, and the processing circuitry (6) is further configured to:
determine the drift speed, based on dividing a distance between the predicted position and the actual position by a time required to reach to the actual position.

**12.** The disturbance estimation apparatus (1) of claim 11, further comprising:
a display (6) configured to display:

a chart including a region where the ship navigates; and
the disturbance data including the drift direction and the drift speed of the disturbance at a display position on the chart, wherein the display position corresponds to a location at which the disturbance data is determined.

**13.** The disturbance estimation apparatus (1) as claimed in any of claims 1 to 12, wherein the disturbance calculator (52) is further configured to:
determine the disturbance data when the magnitude and the direction of the thrust force of the ship are substantially constant during a specific time interval.

**14.** A disturbance estimation method, comprising:

receiving navigation data including an actual position and time of a ship on a water surface;
receiving thrust data indicating a magnitude and a direction of a thrust force of the ship;

estimating a predicted position of the ship under an absence of a disturbance condition at a predetermined time in the future using a state estimation model based on the navigation data and the thrust data; and determining disturbance data including a drift direction of the ship drifted by an external force based on a difference between the predicted position estimated by the state estimation model and an actual position of the ship at the predetermined time.

15. A non-transitory computer readable medium having stored thereon computer-executable instructions which, when executed by a computer, cause the computer to:

receive navigation data including an actual position and time of the ship on a water surface;
receive thrust data indicating a magnitude and a direction of a thrust force of the ship;
estimate a predicted position of the ship under an absence of a disturbance condition at a predetermined time in the future using a state estimation model based on the navigation data and the thrust data; and
determine disturbance data including a drift direction of the ship drifted by an external force based on a difference between the predicted position estimated by the state estimation model and an actual position of the ship at the predetermined time.

**FIG. 1**

**FIG. 2**

**FIG. 3**

EP 4 293 464 A1

**FIG. 4**

EP 4 293 464 A1

FIG. 5

EP 4 293 464 A1

FIG. 6

**FIG.7**

Processing circuitry 5

- Display 6
- Disturbance Data Output Terminal 53
- Disturbance Calculator 52
- Position Estimator 51
- First Machine Training Unit 54
- Drift Output Terminal 57
- Drift Position Estimator 56
- Second Machine Training Unit 58
- Thrust Data Receiver 4
- Navigation Data Receiver 3
- Basic Data Receiver 8
- GNSS Receiver 2
- Time, tidal current and wind information
- 1

**FIG. 8**

**FIG. 9**

EP 4 293 464 A1

1000

```
                          ┌─────────────┐
                          │    Start    │
                          └──────┬──────┘
                                 │
                                 ▼
┌─────────────────────────────────────────────────────────────────────┐
│  Acquire navigation data including actual position and time of the    │  1002
│                            ship                                        │
└────────────────────────────────┬──────────────────────────────────────┘
                                 │
                                 ▼
┌─────────────────────────────────────────────────────────────────────┐
│  Receive thrust data indicating a magnitude and a direction of a       │  1004
│                     thrust force of the ship                           │
└────────────────────────────────┬──────────────────────────────────────┘
                                 │
                                 ▼
┌─────────────────────────────────────────────────────────────────────┐
│  Estimate a predicted position of the ship at a future point in a      │  1006
│  predetermined time to reach the predicted position by inputting the   │
│  navigation data and the thrust data into a first trained model        │
└────────────────────────────────┬──────────────────────────────────────┘
                                 │
                                 ▼
┌─────────────────────────────────────────────────────────────────────┐
│           Acquire actual position at the predetermined time            │  1008
└────────────────────────────────┬──────────────────────────────────────┘
                                 │
                                 ▼
                              (  A  )
```

**FIG. 10A**

A

1000

No

**Are magnitude and direction of thrust force substantially constant for the predetermined time?** — 1010

Yes

**Are direction and speed of ship movement substantially constant for the predetermined time?** — 1012

No

Yes

Determine disturbance data including a drift direction of the ship that is drifted by an external force based on a difference between the predicted position estimated by the first trained model and the actual position of the ship at the determined time — 1014

Display a chart including a region where the ship navigates — 1016

Display the disturbance data including the drift direction and the drift speed at a display position on the chart — 1018

Stop

**FIG. 10B**

Predicted position at time
T=T1 with no disturbance

Actual position at time T=T1

P2'   P2

T2

drift vector

disturbance

thrust force and
direction

1100

P1

T1

**FIG. 11**

**FIG. 12**

EP 4 293 464 A1

1300

Start

Obtain propeller speed, steering angle, Ship position at (t=t0) — 1302

Ship Information — 1212

Calculate ship position without disturbance t=t1 using a kinetic model of a body of the ship — 1304

Acquisition of actual ship position at (t=t1) — 1306

Disturbance calculation — 1308

Stop

**FIG. 13**

Way point

T2          P2'          P2

Virtual position at time T=T1          Actual position at time T=T1
with no disturbance

drift vector

disturbance

thrust force and
direction

1400

T1          P1

Way point          **FIG. 14**

P2' Tidal current vector   P2

T2

Virtual position at time T=T1
with wind disturbance

Actual position at time T=T1

disturbance

thrust force and
direction

1500

P1

T1

**FIG. 15**

EP 4 293 464 A1

1600

1212

Ship information

4

Thrust Data

1202

Propeller speed detector

Propeller Speed

1206

Position Estimator

State Estimation Model

Virtual position information

1210

Disturbance Calculator

1204

Steering angle detector

Steering angle

1602

Wind direction and wind speed detector

Wind direction and wind speed

1208

Navigation Data Receiver

Position information

**FIG. 16**

1700

```
                              ┌─────────────┐
                              │    Start    │
                              └──────┬──────┘
                                     │
                                     ▼
              ┌──────────────────────────────────────────────┐
              │ Obtain Propeller speed, Steering angle, Wind  │── 1702
              │   direction and wind speed, Ship position at  │
              │                  (t=t0)                        │
              └──────────────────────┬───────────────────────┘
                                     │
   ┌───────────┐                     ▼
   │   Ship    │── 1212   ┌──────────────────────────────────────────────┐
   │Information│─────────▶│ Calculate ship position with wind disturbance │── 1704
   │           │          │  t=t1 using a kinetic model of a body of the  │
   └───────────┘          │                   ship                         │
                          └──────────────────────┬───────────────────────┘
                                     │
                                     ▼
              ┌──────────────────────────────────────────────┐
              │    Acquisition of actual ship position (t=t1) │── 1706
              └──────────────────────┬───────────────────────┘
                                     │
                                     ▼
              ┌──────────────────────────────────────────────┐
              │       Surface tidal current vector calculation│── 1708
              └──────────────────────┬───────────────────────┘
                                     │
                                     ▼
                              ┌─────────────┐
                              │    Stop     │
                              └─────────────┘
```

**FIG. 17**

**FIG. 18**

EP 4 293 464 A1

EP 4 293 464 A1

1212

Ship
information

1900

Thrust Data — 4

1202

Propeller
speed detector

Propeller Speed

1206

Position Estimator

State Estimation
Model

Virtual position information

1204

Steering angle
detector

Steering angle

1210

Disturbance
Calculator

1902

Tidal current
detector

Tidal current

1208

Navigation
Data Receiver

Position information

**FIG. 19**

**FIG. 20**

EP 4 293 464 A1

Europäisches
Patentamt
European
Patent Office
Office européen
des brevets

# EUROPEAN SEARCH REPORT

Application Number

EP 23 17 9314

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2017/233051 A1 (KAWASAKI CHIZU [JP] ET AL) 17 August 2017 (2017-08-17) * paragraphs [0048], [0051], [0054], [0055], [0059], [0060]; figures 1,3 * | 1-15 | INV. G05D1/02 |
| X | JP H08 324493 A (MITSUBISHI HEAVY IND LTD) 10 December 1996 (1996-12-10) * paragraphs [0071], [0072] * | 1,14,15 | |

TECHNICAL FIELDS SEARCHED (IPC)

G05D

The present search report has been drawn up for all claims

| Place of search | Date of completion of the search | Examiner |
|---|---|---|
| Munich | 3 November 2023 | Alesandrini, Bruno |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.......................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 17 9314

This annex lists the patent family members relating to the patent documents cited in the above-mentioned European search report.
The members are as contained in the European Patent Office EDP file on
The European Patent Office is in no way liable for these particulars which are merely given for the purpose of information.

03-11-2023

| Patent document cited in search report | | | Publication date | Patent family member(s) | | | Publication date |
|---|---|---|---|---|---|---|---|
| US | 2017233051 | A1 | 17-08-2017 | CN | 106660613 | A | 10-05-2017 |
| | | | | EP | 3176068 | A1 | 07-06-2017 |
| | | | | JP | 6513677 | B2 | 15-05-2019 |
| | | | | JP | WO2016017358 | A1 | 05-04-2018 |
| | | | | US | 2017233051 | A1 | 17-08-2017 |
| | | | | WO | 2016017358 | A1 | 04-02-2016 |
| JP | H08324493 | A | 10-12-1996 | JP | 3332670 | B2 | 07-10-2002 |
| | | | | JP | H08324493 | A | 10-12-1996 |

EPO FORM P0459

For more details about this annex : see Official Journal of the European Patent Office, No. 12/82